# EUROPEAN PATENT SPECIFICATION

(11) **EP 2 956 872 B1**
(45) Date of publication and mention of the grant of the patent: **08.08.2018**
(21) Application number: 13704788.2
(22) Date of filing: 15.02.2013
(51) Int. Cl.: G06F 17/30

(54) **METHOD AND APPARATUSES FOR HANDLING CONCURRENT ACCESSES TO DATA IN A DIRECTORY**
VERFAHREN UND VORRICHTUNGEN ZUR VERWALTUNG GLEICHZEITIGER ZUGRIFFE AUF DATEN IN EINEM VERZEICHNIS
PROCÉDÉ ET APPAREILS DE TRAITEMENT D'ACCÈS CONCURRENTS À DES DONNÉES DANS UN RÉFÉRENTIEL

(43) Date of publication of application: 23.12.2015
(73) Proprietor: Telefonaktiebolaget LM Ericsson (publ), 164 83 Stockholm (SE)
(72) Inventor: MONTEJO AYALA, Marta, ES-28901 Getafe (ES); INIESTA GONZALEZ, Antonio, E-28046 Madrid (ES); NAVAS CORNEJO, Angel, E-28918 Leganes (ES)
(74) Representative: Ericsson
(86) International application number: PCT/EP2013/053139
(87) International publication number: WO 2014/124693

(56) References cited:
- EP-A1- 2 210 194
- WO-A1-2011/098168
- ROHIT P ET AL: "Concurrency control and recovery on lightweight directory access protocol", PROCEEDINGS OF SPIE, S P I E - INTERNATIONAL SOCIETY FOR OPTICAL ENGINEERING, US, vol. 5099, 1 January 2003 (2003-01-01), pages 409-420, XP002494896, ISSN: 0277-786X

## Description

### TECHNICAL FIELD

The present specification generally relates to concurrent accesses to data in a directory; and, more specifically, the invention relates to concurrent accesses with a Lightweight Directory Access Protocol in data layered architecture.

### BACKGROUND

The telecommunications networks face the issue of storing and processing a huge amount of user data for a huge amount of subscribers. Current trends suggest and develop a so-called user data convergence architecture, which is a sort of data layered architecture, for storing and accessing the user data for a huge amount of subscribers.

A user data convergence (UDC) architecture, as specified in 3GPP TS 29.335 V11.1.0, is built up by separating user data from application logic operating on said user data. User data is stored in a logically unique repository, a so-called user data repository (UDR), which allows access from entities handling the application logic, the so-called Front-Ends (FEs). The UDR is a functional entity that acts as a single logical repository of the user data and is unique from FEs perspective, and wherein each FE connects to the UDR through a so-called 'Ud' reference point to access the user data.

This UDC architecture can be applied and used by most of the conventional user data directories in telecommunications networks. For example, one or more conventional Home Location Register (HLR), one or more conventional Home Subscriber Server (HSS), one or more Number Portability Register (NPR), one or more Equipment Identity Register (EIR) and others may be provided with a UDC architecture by configuring their respective user data into the UDR and by implementing their respective application logic in a number of dedicated application FE servers, such as one or more HLR-FE servers, one or more HSS-FE servers, one or more NPR-FE servers, one or more EIR-FE servers and others.

The Ud reference point allows the different FEs to create, read, modify and delete user data stored in the UDR via a Lightweight Directory Access Protocol (LDAP), and also supports subscriptions/notifications functionality to allow an FE to be notified via a Simple Object Access Protocol (SOAP) of specific events which may occur on specific user data in the UDR. In particular, the events may be changes on existing user data, addition of user data, and so on. On the other hand, the user data that a particular application FE may accesses in the UDR through the reference point Ud complies with a data structure agreed on between the particular application FE and the UDR.

The UDC architecture conventionally requires a sort of isolation per subscriber process of the operations from the FEs towards the UDR in order to ensure that only one process is updating the same user data for the subscriber at a specific time. The conventional LDAP protocol supports isolation properties in one LDAP update operation (Add, Delete and Modify) because each of these updating operations acts upon an entry and contained attributes.

However, this mechanism is not enough since several concurrent processes in an application FE can read the same data from the UDR and update the data more or less simultaneously without considering other modifications performed by any other concurrent processes.

A first possible solution for concurrency is disclosed in US 2010/0268815 A1. This publication discloses a mechanism, which makes it use of a collision detection counter (CDC) and a maximum number of collisions to detect (NDC), and whereby updating user data in the UDR is carried out with an LDAP Modify request which includes a number of ADD operations to execute:

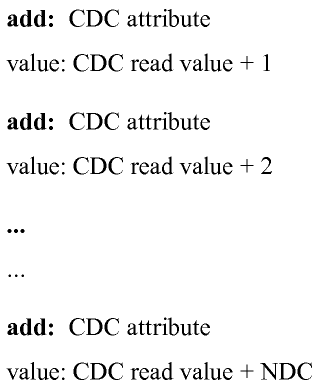

This mechanism guarantees that if a process 'A' reads the subscriber profile when attribute CDC has value x, and a number N of concurrent processes also read the same subscriber data profile (CDC=x) and modifies it prior to finishing the process A, when process A tries to perform the modification (LDAP Modify) of the subscriber profile, this operation is going to fail if N <= NDC. A second possible solution for concurrency is disclosed in WO 2011/098168 A1, whereby a directory database sends a first status information for a data entry to one or more clients. Then, a client sends a request for modification of the data entry to the directory database, the request for modification comprising a second status information; and, where the second status information matches the first status information, the modification is carried out, otherwise the modification is rejected.

There are some applications that hold user data shared by a number of subscribers. One instance is the Policy and Charging Rules Function (PCRF) of a Policy and Charging Control (PCC) architecture specified in 3GPP TS 23.203 V11.8.0. The PCRF provides usage monitoring function for a plurality of subscribers that share a common data plan, i.e. PCRF handles a counter for data usage consumption that is shared by a bunch of subscribers. Other instances may be a corporation subscription that holds a shared data plan for all the employees, a university that has a shared data plan for the computers that the students use, or scenarios in the field of Machine-To-Machine (M2M) communications, wherein a unique subscription is hold for thousands of devices like sensors or the like. Therefore, these families, corporations, or multiple-subscriptions may have hundreds or even thousands of members.

Whilst the above mechanism is found to be effective and appropriate for low NDC values, one can easily figure out that where the number of concurrent processes is much higher (let us say NDC in the range of hundreds or higher), the performance of the system would be seriously penalized if every LDAP Modify consists of hundreds of ADD operations.

There is thus a need to provide a different mechanism that allows detecting collisions caused by any number of concurrent processes operating on the same shared data, without compromising the bandwidth demanded and performance of the system, especially, where the number of concurrent processes is high.

### SUMMARY

The present specification is aimed to at least minimize the above drawbacks and provides for a new method of handling concurrent LDAP processes triggered from different LDAP clients towards a UDR, and corresponding apparatuses arranged to support said method. The invention concerns a method as in claim 1, a user data repository as in claim 7 and a front-end server as in claim 11.

On the other hand, the invention may be practised by a computer program, the computer program being loadable into an internal memory of a computer with input and output units as well as with a processing unit, and comprising executable code adapted to carry out the above method steps. In particular, this executable code may be recorded in a carrier readable in the computer.

### BRIEF DESCRIPTION OF THE DRAWINGS

The features, objects and advantages of the invention will become apparent by reading this description in conjunction with the accompanying drawings, in which:
FIG. 1 shows an exemplary UDC architecture with a UDR and a number of FEs, which in particular may respectively include instances of a PCRF, a HLR, an EIR, a HSS and an NPR.
FIG. 2 basically represents a method of handling concurrent LDAP accesses from a number of FEs towards a UDR.
FIG. 3 shows exemplary further sequences of actions to be carried out upon detecting a concurrent access in accordance with embodiments of the invention.
FIG. 4 shows an exemplary configuration of the UDR with exemplary sets of user data for one or more subscriber in accordance with embodiments of the invention.
FIG. 5 shows exemplary configurations of several FEs with exemplary sets of new version values to be used for successive LDAP modify requests in accordance with embodiments of the invention.
FIG. 6 shows a basic component structure of an FE server in accordance with embodiments of the invention.
FIG. 7 shows a basic component structure of a UDR in accordance with embodiments of the invention.
FIG. 8A, 8B and 8C illustrate an exemplary application of the method illustrated in FIG. 1 in a particular scenario where several PCRFs of the PCC architecture trigger concurrent accesses to the UDR for controlling overall quota and accumulated usage consumption for a subscription.

### DETAILED DESCRIPTION

The following describes currently preferred embodiments of a UDR, an FE server and a method of handling concurrent LDAP processes triggered from one or more FE servers equipped with respective LDAP clients towards the UDR.

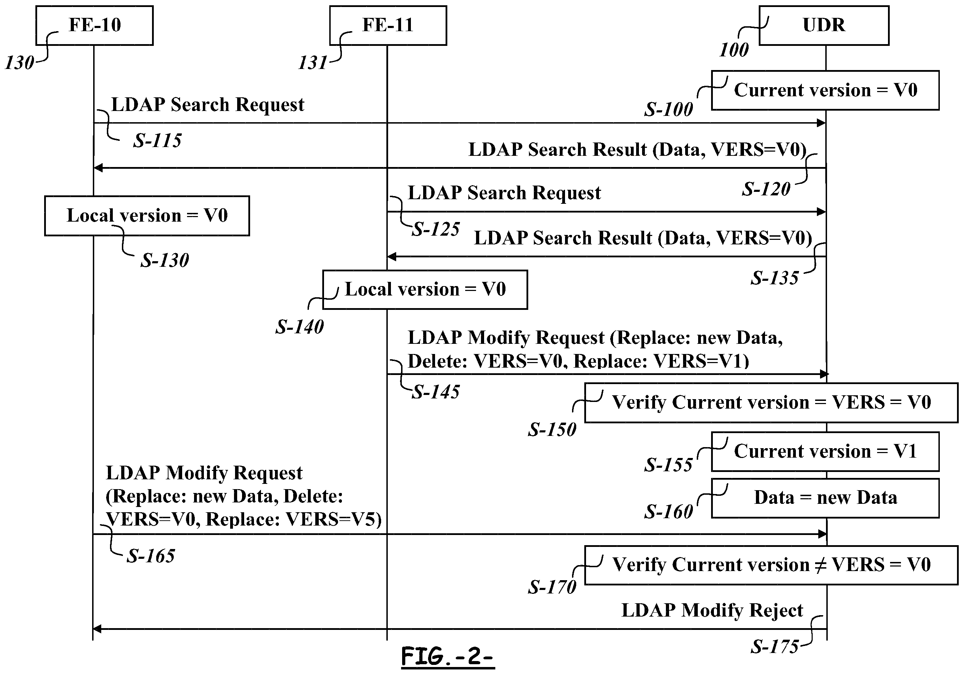

Fig. 2 illustrates an embodiment of this method. The sequence of actions illustrated in Fig. 2 starts with a step S-100 of setting of a current version value, e.g. 'VO', to a given set of user data of reference, namely the set of user data 16j, at the UDR 100. This step may be a very first step to start the UDR up and running, or may be the consequence of a previous chain of actions, as the ones explained in the following, to achieve the setting of a new current version value like, for example, in step S-155. In this respect, each particular set of user data available at the UDR is assigned a particular current version value.

That is, the method illustrated with reference to Fig. 2 assumes that the current version value assigned to a particular set of user data 16j at the UDR 100 is 'V0'.

In this situation, a first FE server 130 sends during a step S-115, and a second FE server 131 sends during a step S-125, respective LDAP search requests to read a same set of user data 16j for a user. The UDR 100 receiving said LDAP search requests returns to the first FE server 130 and to the second FE server 131 respective LDAP search results during steps S-120 and S-135. These LDAP search results include the requested set of user data 16j along with current version value V0 assigned to said set of user data.

Both first and second FE servers 130-131 receiving the set of user data along with the current version value, start processing the received set of user data and may save the associated current version value V0 as a current local version during respective steps S-130 and S-140.

In particular, the processing of the received set of user data may take a different time at each FE server and, in this exemplary illustration, the second FE server 131 is the first one in determining a modification of the received set of user data as a result of the processing and that should be updated in the UDR.

Then, the second FE server 131 submits to the UDR 100, during a step S-145, an LDAP modify request which includes: a first replace indication with new data to replace in the set of user data, that is, the new data determined during the processing of the received set of user data; a delete indication with the current version value, that is, the value V0 previously received; and a second replace indication with a new version value, that is, a new version value V1 which the second FE server 131 has exemplary assigned to the set of user data once modified.

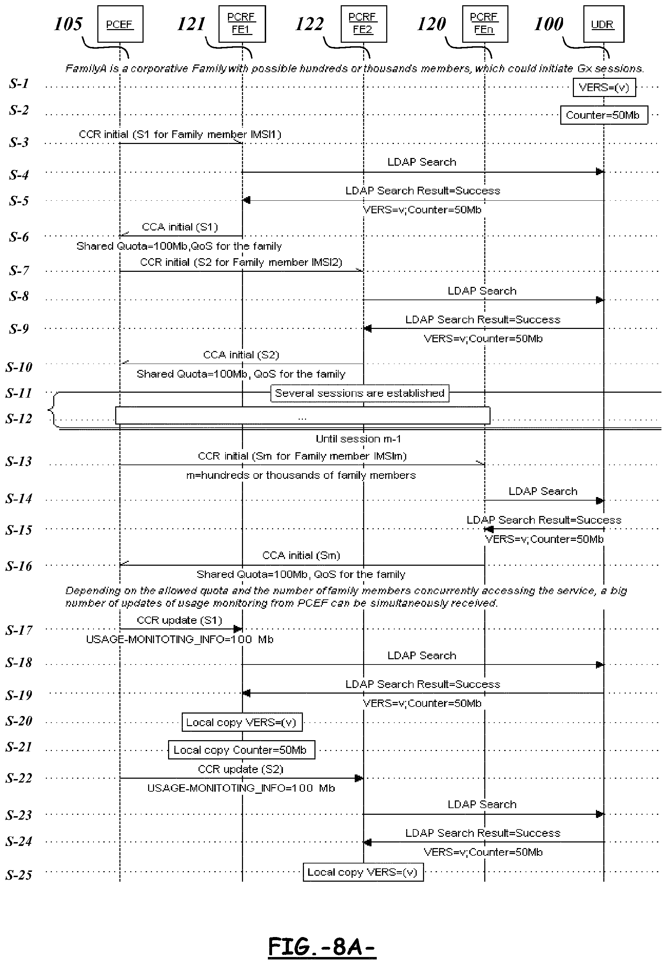

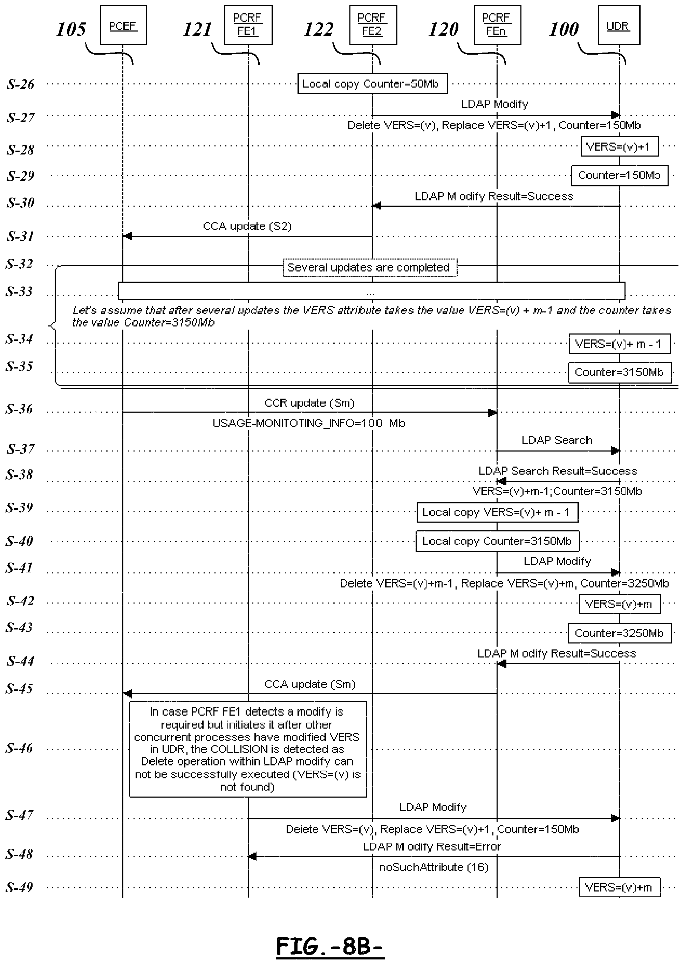

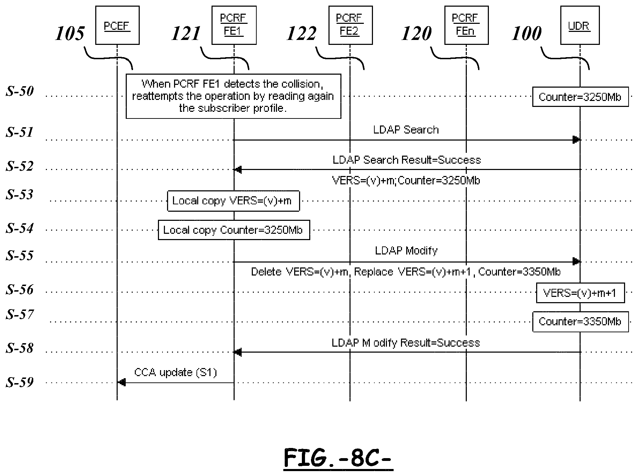

Upon receiving the LDAP modify request, the UDR 100 checks during a step S-150 whether the current version value received with the delete indication, namely V0, matches the current version value lately assigned at the UDR (during previous step S-100) to the set of user data, namely V0. Where a match is verified, as in the present case, the UDR 100 replaces during a step S-155 the current version value V0 assigned to the set of user data 16j at the UDR (during the previous step S-100) by the new version value V1 received with the second replace indication, and the UDR 100 replaces during a step S-160 corresponding data in the set of user data by the new data received with the first replace indication. In addition, where the LDAP modify request has been successfully executed, the UDR 100 may return a successful LDAP modify result to the second FE server 131, which is not illustrated in Fig. 2 but it is illustrated in Fig. 8A-8C for a particular embodiment.

That is, as a result of the last actions carried out at the UDR upon verifying that the current version value received with the delete indication, namely V0, matches the current version value last assigned at the UDR, the current set of user data 16j has been modified and is now associated to a current version value V1 at the UDR.

In this exemplary sequence of actions, the processing of the set of user data 16j originally received by the first FE server 130 has lasted longer than the processing by the second FE server 131. In this situation, the first FE server 130 is the second one in determining a modification of the originally received set of user data, as a result of the processing, and that should be updated in the UDR.

Then, the first FE server 130 submits to the UDR 100, during a step S-165, an LDAP modify request which includes: a first replace indication with new data to replace in the set of user data, that is, the new data determined during the processing of the received set of user data; a delete indication with the current version value, that is, the value V0 previously received; and a second replace indication with a new version value, that is, a new version value V5 which the first FE server 130 has exemplary assigned to the set of user data once modified.

Upon receiving the LDAP modify request, the UDR 100 checks during a step S-170 whether the current version value received with the delete indication, namely V0, matches the current version value lately assigned at the UDR (during previous step S-155) to the set of user data, namely V1. Where such match cannot be verified, as in the present case, the UDR 100 refuses the modification and returns during a step S-175 an LDAP modify reject to the first FE server 130.

In other words, the UDR 100 has solved the concurrency of more than one attempt to modify user data at an entry in the UDR by allowing only the modification by a first process to notify of such modification. The concurrent one or more processes that have got the rejection should attempt again to obtain the last and fresh version of the set of user data and proceed as described above.

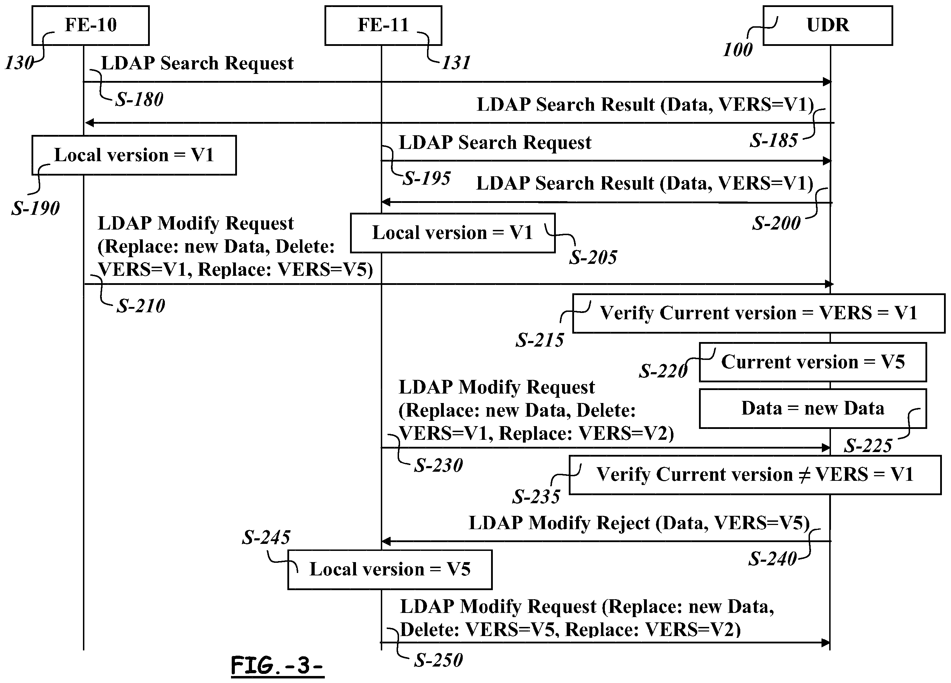

Nevertheless, different embodiments are provided for by the present specification in order to obtain the last version of the set of user data by other concurrent processes, as Fig. 3 illustrates.

As illustrated in Fig. 3, the first FE server 130, which had received during the step S-175 the LDAP modify reject, newly submits during a step S-180 an LDAP search request to read the same set of user data 16j for the user. The UDR 100 receiving said LDAP search request returns to the first FE server 130 a corresponding LDAP search result during a step S-185. This LDAP search result includes the requested set of user data 16j, which had been previously modified during the step S-160 illustrated in Fig. 2, along with current version value V1, which had been previously assigned during the step S-155 illustrated in Fig. 2 to the modified set of user data 16j.

Still with reference to Fig. 3, the first FE server 130 receiving the set of user data along with the current version value starts processing the received set of user data and may save the associated current version value V1 as a current local version during a step S-190.

Whilst the first FE server 130 processes the set of user data, the second FE server 131, which had successfully triggered the previous LDAP modify request during the step S-145 illustrated in Fig. 2, newly submits during a step S-195 an LDAP search request to read the same set of user data 16j for the user. The UDR 100 receiving said LDAP search request returns to the second FE server 131 a corresponding LDAP search result during a step S-200. This LDAP search result includes, as for the first FE server 130, the requested set of user data 16j, which had been previously modified during the step S-160 illustrated in Fig. 2, along with current version value V1, which had been previously assigned during the step S-155 illustrated in Fig. 2 to the modified set of user data 16j.

Still with reference to Fig. 3, the second FE server 131 receiving the set of user data along with the current version value also starts processing the received set of user data and may also save the associated current version value V1 as a current local version during a step S-205.

In this exemplary case, it is the first FE server 130 the first one in determining a modification of the received set of user data as a result of the processing and that should be updated in the UDR.

Then, the first FE server 130 submits to the UDR 100, during a step S-210, an LDAP modify request which includes: a first replace indication with new data to replace in the set of user data, that is, the new data determined during the processing of the received set of user data; a delete indication with the current version value, that is, the value V1 previously received during step S-185; and a second replace indication with a new version value, that is, a new version value V5 which the first FE server 130 has exemplary assigned to the set of user data once modified.

Upon receiving the LDAP modify request, the UDR 100 checks during a step S-215 whether the current version value received with the delete indication, namely V1, matches the current version value lately assigned at the UDR (during previous step S-155 illustrated in Fig. 2) to the set of user data, namely V1. Where a match is verified, as in the present case, the UDR 100 replaces during a step S-220 the current version value V1 assigned to the set of user data 16j at the UDR (during the previous step S-155 illustrated in Fig. 2) by the new version value V5 received with the second replace indication, and the UDR 100 eventually replaces during a step S-225 corresponding data in the set of user data by the new data received with the first replace indication. In addition, where the LDAP modify request has been successfully executed, the UDR 100 may return a successful LDAP modify result to the first FE server 130, which is not illustrated in Fig. 3 but it is illustrated in Fig. 8A-8C for a particular embodiment.

That is, as a result of the last actions carried out at the UDR upon verifying that the current version value received with the delete indication, namely V1, matches the current version value last assigned at the UDR, the current set of user data 16j has been modified and is now associated to a current version value V5 at the UDR.

In this exemplary sequence of actions, it is the second FE server 131 the one which later determines a modification of the originally received set of user data, as a result of the processing, and that should be updated in the UDR.

Then, the second FE server 131 submits, during a step S-230, to the UDR 100 an LDAP modify request which includes: a first replace indication with new data to replace in the set of user data, that is, the new data determined during the processing of the received set of user data; a delete indication with the current version value, that is, the value V1 previously received during the step S-200; and a second replace indication with a new version value, that is, a new version value V2 which the second FE server 131 has exemplary assigned to the set of user data once modified.

Upon receiving the LDAP modify request, the UDR 100 checks during a step S-235 whether the current version value received with the delete indication, namely V1, matches the current version value lately assigned at the UDR (during previous step S-220) to the set of user data, namely V5. Where such match cannot be verified, as in the present case, the UDR 100 refuses the modification and returns during a step S-240 an LDAP modify reject to the second FE server 131.

In an embodiment of the invention disclosed above with reference to the LDAP modify reject submitted in step S-175, upon receiving such LDAP modify reject at the first FE server, such first FE server re-submits again, as in step S-180, the LDAP search request that triggered the further attempt to modify data and the receipt of the LDAP modify reject.

In another embodiment, the LDAP modify reject returned during step S-240 from the UDR 100 to the second FE server 131 includes the previously modified set of user data 16j, which had been modified during the step S-225, along with the current version value V5, which had been previously assigned during the step S-220 to the modified set of user data 16j.

This another embodiment allows the second FE server 131 to immediately start the processing of the received set of user data, without needs for re-submitting again the LDAP search request; and, as explained for other embodiments, the second FE server 131 may also save the associated current version value V5 as a current local version during a step S-245.

In other words, those FE servers which are adapted to receive an LDAP modify reject, which includes the set of user data 16j more recently modified along with the current version value more recently assigned, do neither need to re-submit the LDAP search request nor wait for the response, gain time for processing the received set of user data and are thus in a better position for winning the concurrent access.

Thus, as illustrated in Fig. 3, the second FE server 131 may process the set of user data received with the LDAP modify reject in step S-240 and, upon determining a modification of the received set of user data, may submit during a step S-250 to the UDR 100 an LDAP modify request which includes: a first replace indication with new data to replace in the set of user data, that is, the new data determined during the processing of the received set of user data; a delete indication with the current version value, that is, the value V5 previously received during the step S-240; and a second replace indication with a new version value, that is, the new version value V2 which the second FE server 131 has exemplary assigned to the set of user data once modified.

In order to carry out the above method of handling concurrent LDAP processes triggered from one or more FE servers equipped with respective LDAP clients towards the UDR, the present specification provides for an enhanced UDR 100 and one or more enhanced FE servers 120-132.

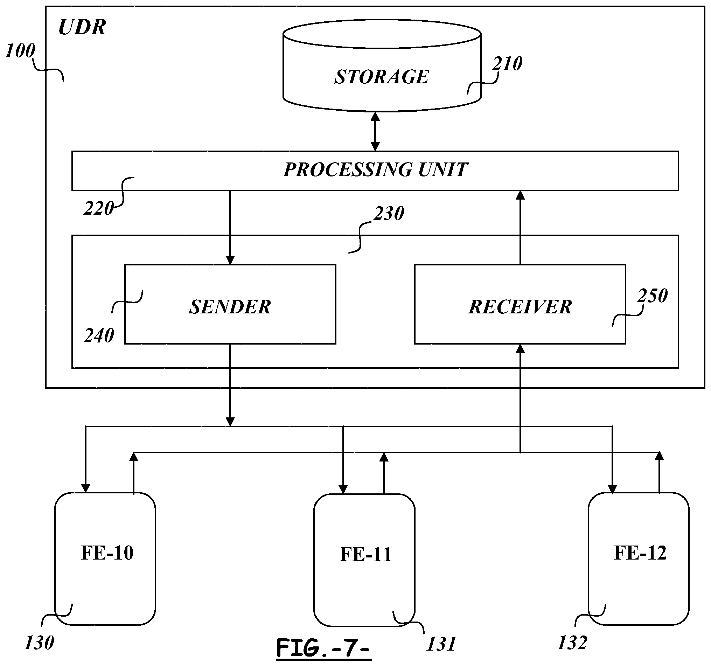

There is thus provided for a UDR 100 as basically illustrated in Fig. 7, for handling concurrent accesses with LDAP requests at an entry in the UDR from the one or more FE servers 120-132 equipped with respective LDAP-clients, which comprises: a receiver 250 for receiving, from the one or more FE servers, one or more LDAP search requests to read a set of user data 16j for a user; and a sender 240 for providing, to the one or more FE servers, the set of user data along with a current version value assigned to the set of user data.

The receiver 250 of the UDR 100 is also adapted for receiving, from at least one amongst the one or more FE servers, an LDAP modify request which includes: a first replace indication with new data to replace in the set of user data, a delete indication with the current version value, and a second replace indication with a new version value; and the UDR 100 also comprises a processing unit 220 for checking whether the current version value received with the delete indication matches the current version value assigned at the UDR to the set of user data.

In this respect, where there is match between the current version value received with the delete indication and the current version value assigned at the UDR to the set of user data, the processing unit 220 is adapted for: replacing the current version value assigned at the UDR to the set of user data by the new version value received with the second replace indication, and replacing corresponding data in the set of user data by the new data received with the first replace indication; whereas, if such match does not occur, the processing unit 220 and the sender 240 cooperate and are adapted for: rejecting the LDAP modify request. In particular, rejecting the LDAP modify request may be carried out by submitting a corresponding LDAP modify reject.

In particular, the sender 240 and the receiver 250 may be implemented with a single and integral input/output unit 230.

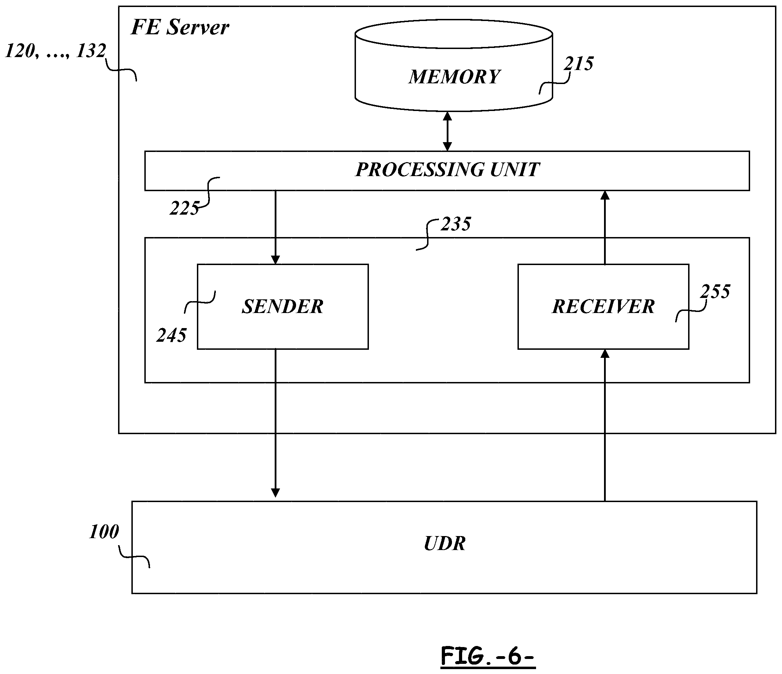

There is also provided for an FE server 120-132 as basically illustrated in Fig. 6, for accessing an entry in the UDR 100 with LDAP, the FE server equipped with an LDAP-client and comprising: a sender 245 for submitting to the UDR 100 one or more LDAP search requests to read a set of user data 16j for a user; a receiver 255 for receiving the set of user data along with a current version value for the set of user data; and a processing unit 225 for processing the set of user data, and for determining a modification of the set of user data.

The sender 245 of this FE server is adapted, where the processing unit 225 of the FE server determines a modification of the set of user data, for submitting to the UDR 100 an LDAP modify request which includes: a first replace indication with new data to replace in the set of user data, a delete indication with the current version value, and a second replace indication with a new version value.

Also in this case and in particular, the sender 245 and the receiver 255 may be implemented with a single and integral input/output unit 235.

Particularly useful for the case where an FE server may save the associated current version value as a current local version, for instance during steps S-130, S-140, S-190, S-205 and S-245 in Fig. 2 or Fig.3, the FE server 120-132 provided for in the present specification, and illustrated in Fig. 6, further comprises storage 215 for assigning the current version value to the set of user data.

This storage 215, for the purpose of assigning the current version value to the set of user data may be a volatile memory such as a conventional RAM; or, where the storage 215 is wanted to be shared for more static configuration purposes, the storage 215 may be implemented with a non-volatile memory, hard disk, optical disc, magnetic tape, holographic memory driver, a flash-memory or the like.

Regarding the new version value that each FE server may send with the second replace indication and included in each LDAP modify request, as illustrated in Fig. 2 and Fig. 3, nothing in this specification prevents from two different FE servers 131 and 132 using and being coincident in submitting a same new version value in a respective LDAP modify request. In fact, since the key value to verify at the UDR, before accepting any data modification, is the current version value received with the delete indication, a coincident new version value between two or more LDAP modify requests should not offer major problems if implemented with a cyclical counter with a sufficiently large range of values.

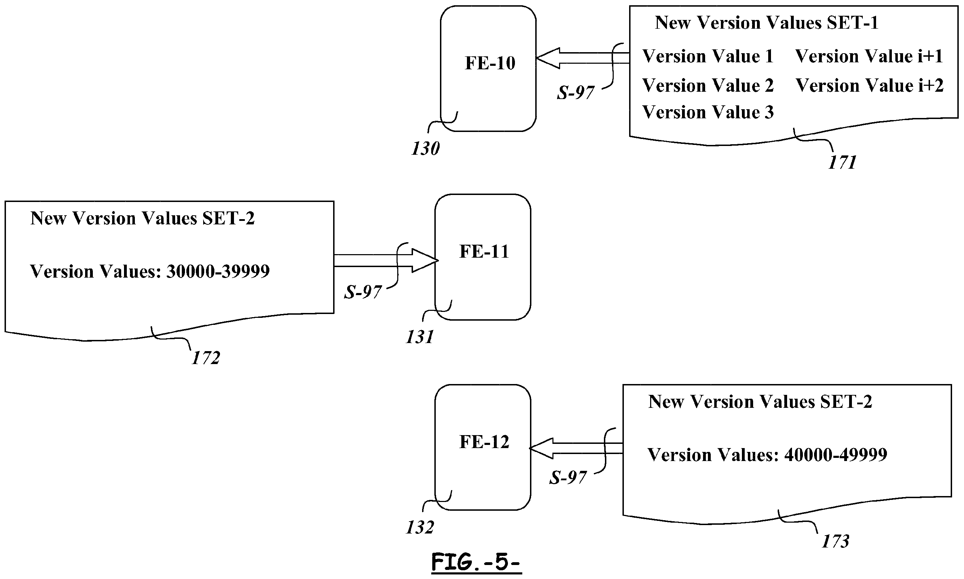

Nevertheless, for the sake of a more accurate distribution of values, as well as for tracking successful and unsuccessful treatments of LDAP modify requests, the present specification further provides for previously assigning, during a step S-97 illustrated in Fig. 5, to each of the one or more FE servers a set of new version values 171-173 to be used for successive LDAP modify requests, the set of new version values being different for each of the one or more FE servers.

To this end, the storage 215 of each FE server may be adapted for storing a set of version values 171-173 assigned to the FE server and to be used as new version values for successive LDAP modify requests. Where this is the case, and in order to save configuration time whenever the FE server is switched on and set up, the storage 215 is preferably implemented with a non-volatile memory, hard disk, optical disc, magnetic tape, holographic memory driver, a flash-memory or the like.

Alternatively, the storage 215 may comprise: a volatile memory the purpose of assigning the current version value to the set of user data as a current local version, and a non-volatile memory for storing the set of version values 171-173 assigned to the FE server and to be used as new version values for successive LDAP modify requests.

Moreover, irrespective of whether the storage 215 is or is not provided for storing the set of version values 171-173 assigned to the FE server, each FE server is adapted for determining, during or after processing the set of user data received, the new data to replace in the set of user data and the new version value. To this end, the processing unit 225 of each FE server may be adapted for determining the new data to replace in the set of user data, and for determining the new version value to be assigned to the set of user data. In particular, where the storage 215 stores the set of version values 171-173 assigned to the FE server, the processing unit 225 will fetch a value next to the last one used in a previous LDAP modify request; whereas, if no specific version value series has been assigned, the processing unit 225 may assigns a new version value in accordance with the logic implemented in the FE server, for example but not limited to, by selecting a random value.

On the other hand, given that the UDR provided for by the present specification may be used as user data repository by a plurality of dedicated and specific application FE servers, one or more amongst the FE servers may include, in accordance with some embodiments, respective instances of a PCRF for controlling user quota and accumulated usage consumption for the user.

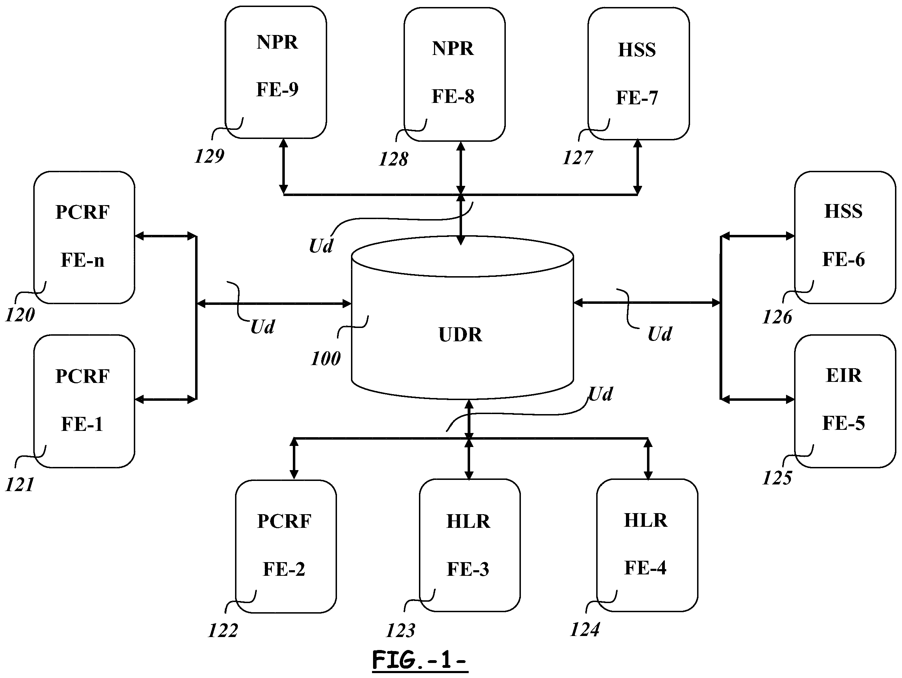

A generic and exemplary scenario wherein the method, UDR and FE servers of the present specification can be applied is illustrated in Fig. 1, which thus shows one or more PCRF-FE servers, one or more HLR-FE servers, one or more HSS-FE servers, one or more NPR-FE servers, and one or more EIR-FE servers. There is no limitation foreseen in the present specification to identify other natures of FE servers fitting the exemplary arrangement of Fig. 1.

In order to optimize the overall system, the different user data that different specific FE servers might operate on are preferably distributed in a plurality of sets of user data so as to ensure that one particular user data cannot belong to different sets and thus being operated separately and without controlling concurrency. In particular, a same set of user data may be operated by different FE servers handling different applications.

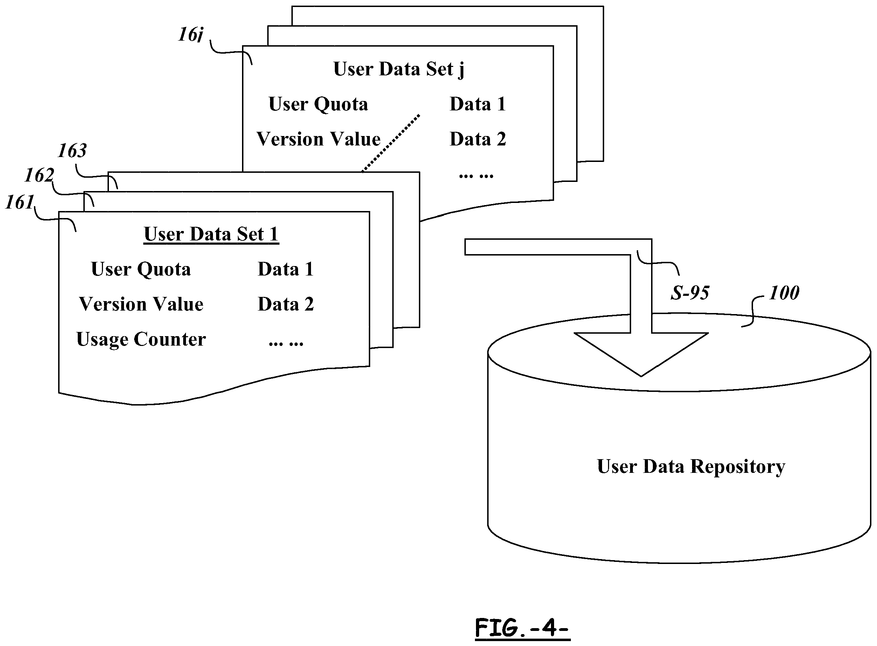

For this and other purposes, the UDR 100 may be configured during a step S-95 so that each set of user data 161-16j for a user is assigned a current version value, as illustrated in Fig. 4. To this end, the UDR 100 illustrated in Fig. 7 may further comprise storage 210 for assigning one or more sets of user data to respective one or more current version values for each user. Alternatively, the processing unit 220 of the UDR may be adapted for generating an initial version value to be used as current version value for any first LDAP search request to be received, such as the step S-100 in Fig. 2 may represent and which was said above to likely be a very first step to start the UDR up and running.

In particular, this storage 210 may be implemented with a volatile memory such as a conventional RAM, which may be advantageous where the processing unit 220 of the UDR sets the initial value for any set of user data; or, where configuration of each set of user data for a user with a current version value is done during a step S-95, the storage 215 may preferably be implemented with a non-volatile memory, hard disk, optical disc, magnetic tape, holographic memory driver, a flash-memory or the like.

As already commented above, at least one FE server, amongst the one or more FE servers, includes an instance of a PCRF for controlling user quota and accumulated usage consumption for the user. Where this is the case, such FE server is referred to as a PCRF-FE server. For instance, Fig. 1 illustrates an UDC comprising PCRF-FE servers 120-122.

In an embodiment of the PCRF-FE server, the set of user data for the user may include one or more counters with accumulated usage consumptions. Also in this embodiment, the set of user data for the user may further include a user quota value indicating a maximum authorized for the accumulated usage consumptions.

In an alternative or complementary embodiment of the PCRF-FE server versus the previous one, one or more users may have a corporative subscription with a plurality of subscribers at the UDR. To this end, the storage 210 of the UDR is further configured to store all user data relevant to the corporative subscription. In particular, the corporative subscription may be a family, a company, a university, or the like.

For those users having a corporative subscription, the set of user data for each user may include one or more counters with accumulated usage consumptions for some or all subscribers in the corporative subscription. Apart from that, the set of user data for each user may further include a user quota value indicating a maximum authorized for the accumulated usage consumptions of the some or all subscribers in the corporative subscription.

Generally speaking, the sets of user data to be processed by a PCRF-FE server 120-122 may include any of: one or more counters for the corporative subscription, one or more counters for each member of the corporative subscription, one or more counters for each member of the corporative subscription and one or more counters for the corporative subscription, one or more counters for an individual user not member of any corporative subscription, and combinations thereof.

In the following, there is disclosed an exemplary application of some embodiments of the present specification where several PCRF-FE servers 120-122 are involved in carrying out a usage monitoring function.

As commented above, PCRF-FE servers 120-122 may handle counters with the accumulated usage consumption for a subscriber or for a corporative subscription (composed by a bunch of subscribers). These counters are stored in UDR 100 and read/updated by PCRF-FE servers through the Ud interface. The counters are updated every time the PCRF receives a report for usage consumption for a subscriber from a Policy and Charging Enforcement Function (PCEF) device 105 of a PCC architecture, and this is done by the PCEF device once a predefined amount of volume is consumed by each subscriber in the corporative subscription.

Moreover, since there may be more than one PCEF device in the PCC architecture, in the case of a corporative subscription including hundreds or thousands of subscribers, PCRF-FE servers may concurrently receive a considerable amount of usage consumption reports from the plurality of PCEF devices, all of them associated with a same counter in UDR.

The sequence of actions exemplary illustrated in Fig. 8A-8C shows a way to model the shared quota concept. There are several subscribers belonging to a family subscription that share a usage limit and whose consumption is tracked in a shared counter in order to detect when the limit is reached so in that moment, a PCRF-FE server can take decisions such as, for example, decrease the quality of service for ongoing sessions related to the corporative subscription.

The sequence illustrated in Fig. 8A-8C starts with assuming a current version value 'v' during a step S-1, and a usage counter value of 50 Megabytes (Mb) during a step S-2. In this context, we may assume a user quota value 5 Gigabytes (Gb) to be shared by members of the corporative subscription.

During steps S-3 to S-16, Gx sessions 'S1, S2 ... Sm-1, Sm' are initiated by the PCEF device 105 towards the different PCRF-FE servers 120-122 and for the different members (IMSI1, IMSI2...) belonging to the family subscription 'A'. A particular PCRF-FE server may download 100 Mb, as it is the quota granted for each session of the family subscription, whenever the usage limit of 5 Gb is not reached. Prior to provide the answer in a CCA message towards the PCEF device 105, each PCRF-FE server retrieves a subscriber profile for the user from the UDR 100.

Depending on the slice quota, obtained from each PCRF-FE server 120-122 and downloaded to the PCEF device 105, and on the number of concurrent family members accessing the service, a significant number of usage monitoring Gx updates may be simultaneously received from the PCEF device.

Particularly during a step S-17, when the subscriber 1 consumes the granted quota of 100Mb, the PCEF device 105 triggers a Usage monitoring Gx update for the session 'S1' towards the PCRF-FE1 server 121 reporting that 100 Mb have been consumed.

During the steps S-18 to S-21, the PCRF-FE1 server 121 is in charge of checking volume limits and, therefore, an access to the UDR 100 is required to read the current usage counter value for Family 'A' (50 Mb). The current version value, which is given with a VERS attribute value, is also received as part of LDAP search result and indicates VERS = 'v'.

During the step S-22, when subscriber 2 consumes the granted quota of 100 Mb, the PCEF device 105 triggers a Usage monitoring Gx update for the session 'S2' towards PCRF-FE2 server 122 reporting that 100 Mb have been consumed.

As for PCRF-FE1 server, during the steps S-23 to S-26, the PCRF-FE2 server 122 is in charge of checking volume limits and, therefore, an access to the UDR 100 is required to read the current usage counter value for Family 'A' (50 Mb). The current version value, which is given with the VERS attribute value, is also received as part of LDAP search result and indicates VERS = 'v'.

At a certain point in time represented by steps S-27 to S-30, the PCRF-FE2 server 122 decides that the current usage counter value for Family 'A' needs to be updated in the UDR with the reported usage for family member IMSI2 (100 Mb) and, therefore, the PCRF-FE2 server 122 sends an LDAP modify request towards the UDR 100 including the following indications: delete [attribute: VERS, value: 'v'], which is the value previously read from the UDR and locally stored in the PCRF-FE2 server; replace [attribute: VERS, value: 'v'+1], which is the new value to be set in the UDR; and replace [usage counter value for Family 'A' with new value: 150 Mb], which is the accumulated value of the previous 50 Mb value plus the recent consumption of 100 Mb.

Since the attribute VERS contains the value 'v' at the UDR, there is a match between the value accompanying the delete indication and the value stored at the UDR, and the LDAP modify request is thus successfully executed. As a result of receiving the successful LDAP modify result during the step S-30, the Usage monitoring Gx update is successfully answered from the PCRF-FE2 server 122 to the PCEF device 105 during the step S-31.

Then, during the steps S-32 to S-35, a further Usage monitoring Gx update procedure occurs for other sessions involving members of Family 'A', wherein an updating of the usage counter value for Family 'A' is carried out at the UDR without any collision, by following the same procedure based on the VERS attribute accompanying the delete indication, and resulting in a current VERS attribute value of 'v' + 'm' - 1, and a current usage counter value for Family 'A' of 3150 Mb.

Further, during the steps S-36 to S-45, a Usage monitoring Gx update, notifying of the 100 Mb quota having been exhausted, is received for a session 'Sm' in a PCRF-FEn server 120. The PCRF-FEn server 120 submits an LDAP search request to UDR 100 and retrieves in the LDAP search result the attribute VERS with current value 'v' + 'm' - 1 and the current usage counter value for Family 'A' of 3150 Mb.

Within this procedure, the PCRF-FEn server 120 submits a corresponding LDAP modify request towards the UDR 100, during the step S-41, in order to update the current usage counter value for Family 'A' with the reported usage for family member IMSIm (100 Mb). This LDAP modify request submitted towards the UDR 100 including the following indications: delete [attribute: VERS, value: 'v' + 'm' - 1], which is the value previously read from the UDR and locally stored in the PCRF-FEn server; replace [attribute: VERS, value: 'v' + 'm'], which is the new value to be set in the UDR; and replace [usage counter value for Family 'A' with new value: 3250 Mb], which is the accumulated value of the previous 3150 Mb value plus the recent consumption of 100 Mb.

As for a previous session treated above, and since the attribute VERS contains the value 'v' + 'm' - 1 in the UDR, there is a match between the value accompanying the delete indication and the value stored at the UDR, and the LDAP modify request is thus successfully executed. As a result of receiving the successful LDAP modify result during the step S-44, the Usage monitoring Gx update is successfully answered from the PCRF-FEn server 120 to the PCEF device 105 during the step S-45.

Still further, during steps S-46 to S-49, the PCRF-FE1 server 121 detects that a modification of the usage counter value for Family 'A' is required, but the PCRF-FE1 server 121 triggers the modification after other concurrent processes have modified the current VERS attribute value at the UDR 100. A corresponding LDAP modify request is sent to the UDR 100 during a step S-47 in order to update the usage counter value for Family 'A' with the reported usage for family member IMSI1 (100 Mb).

This LDAP modify request takes into account those values which were originally read from the UDR, in step S-19, and thus includes the following indications: delete [attribute: VERS, value: 'v'], which is the value previously read from the UDR and locally stored in the PCRF-FE1 server; replace [attribute: VERS, value: 'v' + 1], which is the new value to be set in the UDR; and replace [usage counter value for Family 'A' with new value: 150 Mb], which is the accumulated value of the previous 50 Mb value plus the recent consumption of 100 Mb.

This LDAP modify request fails at the UDR since the VERS attribute value 'v' submitted with the delete indication does not match the current VERS attribute value 'v' + 'm' stored at the UDR.

The UDR 100 thus rejects the LDAP modify request during the step S-48 with an error code 'noSuchAttribute (16)'. The collision has been detected at the UDR and the modification of the counter is not permitted to prevent from maintaining inconsistent data. The attribute values remain at steps S-49 to S-50 the same as were before at the UDR, that is, VERS = 'v' + 'm', and usage counter value for Family 'A' with value 3250 Mb. The PCRF-FE1 server 121 has to reattempt the operation by reading again the subscriber profile.

To this end, during steps S-51 to S-58, the PCRF-FE1 server 121 submits an LDAP search request to UDR and retrieves with the LDAP search result the current VERS attribute value 'v' + 'm' stored at the UDR, and the usage counter value for Family 'A' with value 3250 Mb. Taking into account this data, the PCRF-FE1 server 121 sends a new LDAP modify request to the UDR in order to update the usage counter value for Family 'A' with the reported usage for family member IMSI1 (100 Mb).

This a new LDAP modify request submitted during the step S-55 includes the following indications: delete [attribute: VERS, value: 'v' + 'm'], which is the value recently read from the UDR and locally stored in the PCRF-FE1 server; replace [attribute: VERS, value: 'v' + 'm' + 1], which is the new value to be set in the UDR; and replace [usage counter value for Family 'A' with new value: 3350 Mb], which is the accumulated value of the previous 3250 Mb value plus the recent consumption of 100 Mb.

This new LDAP modify request is successfully executed, since the attribute VERS contains the value 'v' + 'm' at the UDR, there is a match between the value accompanying the delete indication and the value stored at the UDR. As a result of receiving the successful LDAP modify result during the step S-58, the Usage monitoring Gx update is successfully answered from the PCRF-FE1 server 121 to the PCEF device 105 during the step S-59.

As shown in Fig. 8A to Fig. 8C and explained in the steps listed above, this mechanism may detect collisions due to a huge number of processes concurrently accessing to modify a same entry in the UDR while the bandwidth needed in the Ud interface and the computational resources of the UDR are extremely optimized. Both bandwidth and computational resources are always the same and do not depend on the number of concurrent processes accessing the entry.

The invention may also be practised by a computer program, loadable into an internal memory of a computer with input and output units as well as with a processing unit. This computer program comprises to this end executable code adapted to carry out the above method steps when running in the computer. In particular, the executable code may be recorded in a carrier readable means in a computer.

The invention is described above in connection with various embodiments that are intended to be illustrative and non-restrictive. It is expected that those of ordinary skill in this art may modify these embodiments. The scope of the invention is defined by the claims in conjunction with the description and drawings, and all modifications that fall within the scope of the claims are intended to be included therein.

## Claims

1. A method of handling concurrent accesses at an entry in a user data repository (100), hereinafter UDR, wherein the entry in the UDR is concurrently accessed with Lightweight Directory Access Protocol, hereinafter LDAP, requests from one or more front-end servers (120-132) equipped with respective LDAP-clients, the method comprising the steps of:
- receiving (S-115, S-125), at the UDR from the one or more front-end servers, one or more LDAP search requests to read a set of user data (16j) for a user;
- providing (S-120, S-135), from the UDR to the one or more front-end servers, the set of user data along with a current version value assigned (S-100) to the set of user data;
- receiving, at each of the one or more front-end servers, the set of user data along with the current version value assigned by the UDR;
- determining, by a front-end server amongst the one or more front-end servers, new data to replace in the set of user data and a new version value to be assigned to the set of user data;
- submitting (S-145, S-165), from said front-end server to the UDR, an LDAP modify request which includes: a first replace indication with the new data to replace in the set of user data, a delete indication with the current version value received from the UDR, and a second replace indication with the new version value determined by said front-end server;
- upon receiving the LDAP modify request (S-145, S-165) from said front-end, checking at the UDR (S-150, S-170) whether the current version value received from said front-end server with the delete indication matches the current version value assigned at the UDR to the set of user data; and
- where there is a match: replacing (S-155) the current version value assigned at the UDR to the set of user data by the new version value received from said front-end server with the second replace indication, and replacing (S-160) corresponding data in the set of user data by the new data received with the first replace indication; or
- where there is not a match: rejecting (S-175, S-240) the LDAP modify request.

2. The method of claim 1, further comprising a step of assigning (S-95) one or more sets of user data to respective one or more current version values for each user at the UDR.

3. The method of any of claims 1 to 2, wherein after receiving at each front-end server the set of user data along with the current version value, the method further comprises a step of assigning (S-130, S-140) at each front-end server the current version value to the set of user data.

4. The method of any of claims 1 to 3, further comprising a step of assigning (S-97) to each of the one or more front-end servers a set of new version values to be used for successive LDAP modify requests, the set of new version values being different for each of the one or more front-end servers.

5. The method of any of claims 1 to 4, wherein at least one front-end server (120, 121), amongst the one or more front-end servers, includes an instance of a Policy and Charging Rules Function for controlling user quota and accumulated usage consumption for the user, and wherein the set of user data (161) for the user includes one or more counters with accumulated usage consumptions.

6. The method of claim 5, wherein the set of user data (161, 16j) for the user includes a user quota value indicating a maximum authorized for the accumulated usage consumptions.

7. A user data repository (100), hereinafter UDR, for handling concurrent accesses with Lightweight Directory Access Protocol, hereinafter LDAP, requests at an entry in the user data repository, from one or more front-end servers (120-132) equipped with respective LDAP-clients, the UDR comprising:
- a receiver (250) configured to receive, from the one or more front-end servers, one or more LDAP search requests to read a set of user data (161, 16j) for a user;
- a sender (240) configured to provide, to the one or more front-end servers, the set of user data along with a current version value assigned to the set of user data;
- the receiver (250) configured to receive, from a front-end sever amongst the one or more front-end servers, an LDAP modify request which includes: a first replace indication with new data to replace in the set of user data, a delete indication with the current version value provided to said front-end server, and a second replace indication with a new version value determined by said front- end server;
- a processing unit (220) configured to check whether the current version value received from said front-end server with the delete indication matches the current version value assigned at the UDR to the set of user data; and
- where there is match, the processing unit (220) being configured to: replace the current version value assigned at the UDR to the set of user data by the new version value received from said front-end server with the second replace indication, and replace corresponding data in the set of user data by the new data received with the first replace indication; or
- where there is not a match, the processing unit (220) and the sender (240) configured to: reject the LDAP modify request.

8. The UDR of claim 7, further comprising storage (210) configured to assign one or more sets of user data to respective one or more current version values for each user.

9. The UDR of claims 7 or 8, wherein at least one front-end server (120-121), amongst the one or more front-end servers, includes an instance of a Policy and Charging Rules Function for controlling user quota and accumulated usage consumption for the user, and wherein the set of user data for the user includes one or more counters with accumulated usage consumptions.

10. The UDR of claim 9, wherein the set of user data for the user includes a user quota value indicating a maximum authorized for the accumulated usage consumptions.

11. A front-end server (120-132) for accessing an entry in a user data repository (100), hereinafter UDR, with a Lightweight Directory Access Protocol, hereinafter LDAP, the front-end server equipped with an LDAP-client and comprising:
- a sender (245) configured to submit to the UDR (100) one or more LDAP search requests to read a set of user data (161, 16j) for a user;
- a receiver (255) configured to receive, from the UDR, the set of user data along with a current version value assigned by the UDR for the set of user data;
- a processing unit (225) configured to determine new data to replace in the set of user data, and determine a new version value to be assigned to the set of user data; and
- the sender (245) configured to submit, to the UDR (100), an LDAP modify request which includes: a first replace indication with the new data to replace in the set of user data, a delete indication with the current version value received from the UDR, and a second replace indication with the new version value determined by the processing unit (225).

12. The front-end server of claim 11, further comprising storage (215) configured to assign the current version value to the set of user data.

13. The front-end server of any of claims 11 or 12, wherein the storage (215) is configured to store a set of version values (171-173) assigned to the front-end server and to be used as new version values for successive LDAP modify requests.

14. The front-end server of any of claims 11 to 13, further including an instance of a Policy and Charging Rules Function for controlling user quota and accumulated usage consumption for the user, and wherein the set of user data for the user includes one or more counters with accumulated usage consumptions.

15. The front-end server of claim 14, wherein the set of user data for the user includes a user quota value indicating a maximum authorized for the accumulated usage consumptions.

## Patentansprüche

1. Verfahren zur Handhabung gleichzeitiger Zugriffe auf einen Eintrag in einem Benutzerdaten-Repository, im Folgenden UDR, (100), wobei auf den Eintrag im UDR mit LDAP (leichtgewichtiges Verzeichniszugriffsprotokoll)-Anforderungen von einem oder mehreren Frontend-Servern (120-130), die mit jeweiligen LDAP-Clients ausgestattet sind, gleichzeitig zugegriffen wird, wobei das Verfahren die folgenden Schritte umfasst:
- Empfangen (S-115, S-125) einer oder mehrerer LDAP-Suchanforderungen von dem einen oder den mehreren Frontend-Servern am UDR zum Auslesen eines Satzes von Benutzerdaten (16j) für einen Benutzer;
- Bereitstellen (S-120, S-135) des Satzes von Benutzerdaten zusammen mit einem aktuellen Versionswert, der dem Satz von Benutzerdaten zugeordnet wird (S-100), vom UDR für den einen oder die mehreren Frontend-Server;
- Empfangen des Satzes von Benutzerdaten zusammen mit dem durch das UDR zugeordneten aktuellen Versionswert an jedem des einen oder der mehreren Frontend-Server;
- Bestimmen durch einen Frontend-Server unter dem einen oder den mehreren Frontend-Servern neuer Daten zum Ersetzen im Satz von Benutzerdaten und eines neuen Versionswerts, der dem Satz von Benutzerdaten zugeordnet werden soll;
- Übermitteln (S-145, S-165) einer LDAP-modifizieren-Anforderung vom Frontend-Server an das UDR, die umfasst: eine erste Ersetzen-Anzeige mit den neuen Daten zum Ersetzen im Satz von Benutzerdaten, eine Löschen-Anzeige mit dem aktuellen Versionswert, der vom UDR empfangen wird, und eine zweite Ersetzen-Anzeige mit dem neuen Versionswert, der durch den Frontend-Server bestimmt wird;
- Prüfen am UDR (S-150, S-170) bei Empfang der LDPA-modifizieren-Anforderung (S-145, S-165) vom Frontend-Server, ob der vom Frontend-Server mit der Löschen-Anzeige empfangene aktuelle Versionswert mit dem am UDR dem Satz von Benutzerdaten zugeordneten aktuellen Versionswert übereinstimmt; und
- bei Übereinstimmung: Ersetzen (S-155) des am UDR dem Satz von Benutzerdaten zugeordneten aktuellen Versionswerts durch den vom Frontend-Server mit der zweiten Ersetzen-Anzeige empfangenen neuen Versionswert und Ersetzen (S-160) entsprechender Daten im Satz von Benutzerdaten durch die mit der ersten Ersetzen-Anzeige empfangenen neuen Daten; oder
- bei Nichtübereinstimmung: Zurückweisen (S-175, S-240) der LDAP-modifizieren-Anforderung.

2. Verfahren nach Anspruch 1, ferner umfassend einen Schritt des Zuordnens (S-95) eines oder mehrerer Sätze von Benutzerdaten zu einem oder mehreren jeweiligen aktuellen Versionswerten für jeden Benutzer am UDR.

3. Verfahren nach einem der Ansprüche 1 bis 2, wobei das Verfahren nach Empfangen des Satzes von Benutzerdaten zusammen mit dem aktuellen Versionswert an jedem Frontend-Server einen Schritt des Zuordnens (S-130, S-140) des aktuellen Versionswerts zum Satz von Benutzerdaten an jedem Frontend-Server umfasst.

4. Verfahren nach einem der Ansprüche 1 bis 3, ferner umfassend einen Schritt des Zuordnens (S-97) eines Satzes neuer Versionswerte, die für nachfolgende LDAP-modifizieren-Anforderungen verwendet werden sollen, zu jedem des einen oder der mehreren Frontend-Server, wobei der Satz neuer Versionswerte für jeden des einen oder der mehreren Frontend-Server verschieden ist.

5. Verfahren nach einem der Ansprüche 1 bis 4, wobei mindestens ein Frontend-Server (120, 121) unter dem einen oder den mehreren Frontend-Servern eine Instanz einer Richtlinien- und Gebührenerfassungsregelfunktion zum Steuern einer Benutzerquote und eines akkumulierten Nutzungsverbrauchs für den Benutzer umfasst, und wobei der Satz von Benutzerdaten (161) für den Benutzer einen oder mehrere Zähler mit akkumulierten Nutzungsverbräuchen umfasst.

6. Verfahren nach Anspruch 5, wobei der Satz von Benutzerdaten (161, 16j) für den Benutzer einen Benutzerquotenwert umfasst, der ein Maximum angibt, das für die akkumulierten Nutzungsverbräuche autorisiert ist.

7. Benutzerdaten-Repository, im Folgenden UDR, (100) zum Handhaben gleichzeitiger Zugriffe auf einen Eintrag im Benutzerdaten-Repository mit LDAP (leichtgewichtiges Verzeichniszugriffsprotokoll)-Anforderungen von einem oder mehreren Frontend-Servern (120-132), die mit jeweiligen LDAP-Clients ausgestattet sind, wobei das UDR umfasst:
- einen Empfänger (250), der zum Empfangen einer oder mehrerer LDAP-Suchanforderungen von dem einen oder den mehreren Frontend-Servern zum Auslesen eines Satzes von Benutzerdaten (161, 16j) für einen Benutzer konfiguriert ist;
- einen Sender (240), der zum Bereitstellen des Satzes von Benutzerdaten zusammen mit einem aktuellen Versionswert, der dem Satz von Benutzerdaten zugeordnet ist, für den einen oder die mehreren Frontend-Server konfiguriert ist;
- wobei der Empfänger (250) zum Empfangen einer LDAP-modifizieren-Anforderung von einem Frontend-Server unter dem einen oder den mehreren Frontend-Servern konfiguriert ist, die umfasst: eine erste Ersetzen-Anzeige mit neuen Daten zum Ersetzen im Satz von Benutzerdaten, eine Löschen-Anzeige mit dem aktuellen Versionswert, der für den Fronend-Server bereitgestellt wird, und eine zweite Ersetzen-Anzeige mit einem neuen Versionswert, der durch den Frontend-Server bestimmt wird;
- eine Verarbeitungseinheit (220), die so konfiguriert ist, dass sie prüft, ob der vom Frontend-Server mit der Löschen-Anzeige empfangene aktuelle Versionswert mit dem am UDR dem Satz von Benutzerdaten zugeordneten aktuellen Versionswert übereinstimmt; und
- die Verarbeitungseinheit (220) so konfiguriert ist, dass sie bei Übereinstimmung den am UDR dem Satz von Benutzerdaten zugeordneten aktuellen Versionswert durch den vom Frontend-Server mit der zweiten Ersetzen-Anzeige empfangenen neuen Versionswert ersetzt und entsprechende Daten im Satz von Benutzerdaten durch die mit der ersten Ersetzen-Anzeige empfangenen neuen Daten ersetzt; oder
- die Verarbeitungseinheit (220) und der Sender (240) so konfiguriert sind, dass sie bei Nichtübereinstimmung die LDAP-modifizieren Anforderung zurückweisen.

8. UDR nach Anspruch 7, ferner umfassend einen Speicher (210), der zum Zuordnen eines oder mehrerer Sätze von Benutzerdaten zu einem oder mehreren jeweiligen aktuellen Versionswerten für jeden Benutzer konfiguriert ist.

9. UDR nach einem der Ansprüche 7 oder 8, wobei mindestens ein Frontend-Server (120, -121) unter dem einen oder den mehreren Frontend-Servern eine Instanz einer Richtlinien- und Gebührenerfassungsregelfunktion zum Steuern einer Benutzerquote und eines akkumulierten Nutzungsverbrauchs für den Benutzer umfasst, und wobei der Satz von Benutzerdaten für den Benutzer einen oder mehrere Zähler mit akkumulierten Nutzungsverbräuchen umfasst.

10. UDR nach Anspruch 9, wobei der Satz von Benutzerdaten für den Benutzer einen Benutzerquotenwert umfasst, der ein Maximum angibt, das für die akkumulierten Nutzungsverbräuche autorisiert ist.

11. Frontend-Server (120-132) zum Zugreifen auf einen Eintrag in einem Benutzerdaten-Repository, im Folgenden UDR, (100) mit einem leichtgewichtigen Verzeichniszugriffsprotokoll, im Folgenden LDAP, wobei der Frontend-Server mit einem LDAP-Client ausgestattet ist und umfasst:
- einen Sender (245), der zum Übermitteln einer oder mehrerer LDAP-Suchanforderungen zum Auslesen eines Satzes von Benutzerdaten (161, 16j) für einen Benutzer an das UDR (100) konfiguriert ist;
- einen Empfänger (255), der zum Empfangen des Satzes von Benutzerdaten zusammen mit einem aktuellen Versionswert, der durch das UDR für den Satz von Benutzerdaten zugeordnet ist, vom UDR konfiguriert ist;
- eine Verarbeitungseinheit (225), die so konfiguriert ist, dass sie neue Daten zum Ersetzen im Satz von Benutzerdaten bestimmt, und einen neuen Versionswert bestimmt, der dem Satz von Benutzerdaten zugeordnet werden soll; und
- wobei der Sender (245) zum Übermitteln einer LDAP-modifizieren-Anforderung an das UDR (100) konfiguriert ist, die umfasst: eine erste Ersetzen-Anzeige mit den neuen Daten zum Ersetzen im Satz von Benutzerdaten, eine Löschen-Anzeige mit dem aktuellen Versionswert, der vom UDR empfangen wird, und eine zweite Ersetzen-Anzeige mit dem neuen Versionswert, der durch die Verarbeitungseinheit (225) bestimmt wird.

12. Frontend-Server nach Anspruch 11, ferner umfassend einen Speicher (215), der zum Zuordnen des aktuellen Versionswerts zum Satz von Benutzerdaten konfiguriert ist.

13. Frontend-Server nach einem der Ansprüche 11 oder 12, (215), wobei der Speicher so konfiguriert ist, dass er einen Satz von Versionswerten (171-173) speichert, die dem Frontend-Server zugeordnet sind und als neue Versionswerte für nachfolgende LDAP-modifizieren-Anforderungen verwendet werden sollen.

14. Frontend-Server nach einem der Ansprüche 11 bis 13, ferner umfassend eine Instanz einer Richtlinien- und Gebührenerfassungsregelfunktion zum Steuern einer Benutzerquote und eines akkumulierten Nutzungsverbrauchs für den Benutzer, und wobei der Satz von Benutzerdaten für den Benutzer einen oder mehrere Zähler mit akkumulierten Nutzungsverbräuchen umfasst.

15. Frontend-Server nach Anspruch 14, wobei der Satz von Benutzerdaten für den Benutzer einen Benutzerquotenwert umfasst, der ein Maximum angibt, das für die akkumulierten Nutzungsverbräuche autorisiert ist.

## Revendications

1. Procédé de gestion d'accès simultanés au niveau d'une entrée dans un recueil de données d'utilisateur (100), désigné ci-après comme UDR, dans lequel l'entrée dans l'UDR est accédée simultanément avec des demandes de protocole d'accès d'annuaire ultraléger, désigné ci-après comme LDAP, provenant d'un ou plusieurs serveurs frontaux (120-132) équipés des clients LDAP respectifs, le procédé comprenant les étapes consistant à :
- recevoir (S-115, S-125), au niveau de l'UDR depuis un ou plusieurs serveurs frontaux, une ou plusieurs demandes de recherche LDAP afin de lire un ensemble de données d'utilisateur (16j) pour un utilisateur ;
- fournir (S-120, S-135), de l'UDR à un ou plusieurs serveurs frontaux, l'ensemble de données d'utilisateur conjointement à une valeur de version actuelle assignée (S-100) à l'ensemble de données d'utilisateur ;
- recevoir, au niveau de chacun du ou des serveurs frontaux, l'ensemble de données d'utilisateur conjointement à la valeur de version actuelle assignée par l'UDR ;
- déterminer, par un serveur frontal parmi le ou les serveurs frontaux, des nouvelles données à remplacer dans l'ensemble de données d'utilisateur et une nouvelle valeur de versions à assigner à l'ensemble de données d'utilisateur ;
- soumettre (S-145, S-165), depuis ledit serveur frontal à l'UDR, une demande de modification LDAP qui inclut : une première indication de remplacement avec les nouvelles données à remplacer dans l'ensemble de données d'utilisateur, une indication de suppression avec la valeur de version actuelle reçue depuis l'UDR, et une seconde indication de remplacement avec la nouvelle valeur de version déterminée par ledit serveur frontal ;
- lors de la réception de la demande de modification (S-145, S-165) depuis ladite extrémité frontale, vérifier au niveau de l'UDR (S-150, S-170) si la valeur de version actuelle reçue depuis ledit serveur frontal avec l'indication de suppression concorde avec la valeur de version actuelle assignée au niveau de l'UDR à l'ensemble de données d'utilisateur ; et
- si il y a une concordance :remplacer (S-155) la valeur de version actuelle assignée au niveau de l'UDR à l'ensemble de données d'utilisateur par la nouvelle valeur de version reçue depuis ledit serveur frontal avec la seconde indication de remplacement et remplacer (S-160) les données correspondantes dans l'ensemble de données d'utilisateur par les nouvelles données reçues avec la première indication de remplacement ; ou
- s'il n'y a pas une concordance : rejeter (S-175, S240) la demande de modification LDAP.

2. Procédé selon la revendication 1, comprenant en outre une étape d'assignation (S-95) d'un ou plusieurs ensembles de données d'utilisateur à une ou plusieurs valeurs de versions actuelles respectives pour chaque utilisateur au niveau de l'UDR.

3. Procédé selon une quelconque des revendications 1 à 2, dans lequel après la réception au niveau de chaque serveur frontal de l'ensemble de données d'utilisateur conjointement à la valeur de version actuelle, le procédé comprend en outre une étape d'assignation (S-130, S140) au niveau de chaque serveur frontal de la valeur de version actuelle à l'ensemble de données d'utilisateur.

4. Procédé selon une quelconque des revendications 1 à 3, comprenant en outre une étape d'assignation (S-97) à chacun du ou des serveurs frontaux d'un ensemble de nouvelles valeurs de version à utiliser pour des demandes de modification LDAP successives, l'ensemble de nouvelles valeurs de versions étant différent pour chacun du ou des serveurs frontaux.

5. Procédé selon une quelconque des revendications 1 à 4, dans lequel au moins un serveur frontal (120,121), parmi le ou les serveurs frontaux, inclut une instance d'une fonction de règles de politique et facturation pour commander des quotas d'utilisateur et une consommation d'utilisation accumulée pour l'utilisateur et dans lequel l'ensemble de données d'utilisateur (161) pour l'utilisateur inclut un ou plusieurs compteurs avec des consommations d'utilisation accumulées.

6. Procédé selon la revendication 5, dans lequel l'ensemble de données d'utilisateur (161,16j) pour l'utilisateur inclut une valeur de quota d'utilisateur indiquant un maximum autorisé pour les consommations d'utilisation accumulées.

7. Recueil de données d'utilisateur (100), désigné ci-après comme UDR, pour gérer des accès simultanés avec des demandes de protocole d'accès d'annuaire ultraléger, désigné ci-après comme LDAP, au niveau d'une entrée dans le recueil de données d'utilisateur, depuis un ou plusieurs serveurs frontaux (120-132) équipé des clients LDAP respectifs, l'UDR comprenant :
- un récepteur (250) configuré pour recevoir, depuis un ou plusieurs serveurs frontaux, une ou plusieurs demandes de recherche LDAP afin de lire un ensemble de données d'utilisateur (161,16j) pour un utilisateur ;
- un émetteur (240) configuré pour fournir à un ou plusieurs serveurs frontaux, l'ensemble de données d'utilisateur conjointement à une valeur de version actuelle assignée à l'ensemble de données d'utilisateur ;
- le récepteur (250) étant configuré pour recevoir, depuis un serveur frontal parmi le ou les serveurs frontaux, une demande de modification LDAP qui inclut : une première indication de remplacement avec les nouvelles données à remplacer dans l'ensemble de données d'utilisateur, une indication de suppression avec la valeur de version actuelle reçues depuis l'UDR, et une seconde indication de remplacement avec la nouvelle valeur de version déterminée par ledit serveur frontal ;
- une unité de traitement (220) configurée pour vérifier si la valeur de version actuelle reçue depuis ledit serveur frontal avec l'indication de suppression concorde avec la valeur de version actuelle assignée au niveau de l'UDR à l'ensemble de données d'utilisateur ; et
- si il y a une concordance, l'unité de traitement (220) étant configurée pour : remplacer la valeur de version actuelle assignée au niveau de l'UDR à l'ensemble de données d'utilisateur par la nouvelle valeur de version reçue depuis ledit serveur frontal avec la seconde indication de remplacement et remplacer les données correspondantes dans l'ensemble de données d'utilisateur par les nouvelles données reçues avec la première indication de remplacement ; ou
- s'il n'y a pas une concordance, l'unité de traitement (220) et l'émetteur (240) étant configurés pour : rejeter la demande de modification LDAP.

8. UDR selon la revendication 7, comprenant en outre un dispositif de stockage (210) configuré pour assigner un ou plusieurs ensemble de données d'utilisateur à une ou plusieurs valeurs de versions actuelles respectives pour chaque utilisateur.

9. UDR selon les revendications 7 ou 8, dans lequel au moins un serveur frontal (120-121), parmi le ou les serveurs frontaux, inclut une instance d'une fonction de règles de politiques et de facturation pour commander un quota d'utilisateur et une consommation d'utilisation accumulée pour l'utilisateur et dans lequel l'ensemble de données d'utilisateur pour l'utilisateur inclut un ou plusieurs compteurs avec des consommations d'utilisation accumulées.

10. UDR selon la revendication 9, dans lequel l'ensemble de données d'utilisateur pour l'utilisateur inclut une valeur de quota d'utilisateur incluant un maximum autorisé pour les consommations d'utilisation accumulées.

11. Serveur frontal (120-132) pour accéder à une entrée dans un recueil de données d'utilisateur (100), désigné ci-après comme UDR, avec un protocole d'accès d'annuaire ultraléger, désigné ci-après comme LDAP, le serveur frontal étant équipée d'un client LDAP et comprenant :
- un émetteur (245) configuré pour soumettre à l'UDR (100) une ou plusieurs demandes de recherche LDAP afin de lire un ensemble de données d'utilisateur (161,16j) pour un utilisateur ;
- un récepteur (255) configuré pour recevoir, depuis l'UDR, l'ensemble de données d'utilisateur conjointement à une valeur de version actuelle assignée par l'UDR pour l'ensemble de données d'utilisateur ;
- une unité de traitement (225) configurée pour déterminer des nouvelles données à remplacer dans l'ensemble de données d'utilisateur et déterminer une nouvelle valeur de version à assigner à l'ensemble de données d'utilisateur ; et
- l'émetteur (245) étant configuré pour soumettre à l'UDR (100) une demande de modification LDAP qui inclut : une première indication de remplacement avec les nouvelles données à remplacer dans l'ensemble de données d'utilisateur, une indication de suppression avec la valeur de version actuelle reçue de l'UDR et une seconde indication de remplacement avec la nouvelle valeur de version déterminée par l'unité de traitement (225).

12. Serveur frontal selon la revendication 11, comprenant en outre un dispositif de stockage (215) configuré pour assigner la valeur de version actuelle à l'ensemble de données d'utilisateur.

13. Serveur frontal selon une quelconque des revendications 11 ou 12, dans lequel le dispositif de stockage (215) est configuré pour stocker un ensemble de valeurs de version (171-173) assignées au serveur frontal et à utiliser comme des nouvelles valeurs de version pour des demandes de modifications LDAP successives.

14. Serveur frontal selon une quelconque des revendications 11 à 13, incluant en outre une instance d'une fonction de règles de politique facturation pour commander un quota d'utilisateur et une consommation d'utilisation accumulée et dans lequel l'ensemble de données d'utilisateur pour l'utilisateur inclut un ou plusieurs compteurs avec des consommations d'utilisation accumulées.

15. Serveur frontal selon la revendication 14, dans lequel l'ensemble de données d'utilisateur pour l'utilisateur inclut une valeur de quota d'utilisateur indiquant un maximum autorisé pour les consommations d'utilisation accumulées.
